# EUROPÄISCHE PATENTSCHRIFT

(11) **EP 2 501 547 B1**
(45) Veröffentlichungstag und Bekanntmachung des Hinweises auf die Patenterteilung: **21.10.2015**
(21) Anmeldenummer: 10779479.4
(22) Anmeldetag: 16.11.2010
(51) Int. Cl.: B32B 38/06, B30B 15/06, B32B 38/14, B41M 1/28

(54) **LAMINIERKÖRPER, VERFAHREN ZUM HERSTELLEN DESSEN UND VERFAHREN ZUM HERSTELLEN EINES LAMINATS**
LAMINATING BODY, METHOD FOR PRODUCING A LAMINATING BODY AND METHOD FOR PRODUCING A LAMINATE
CORPS DE LAMINAGE, PROCÉDÉ DE FABRICATION D'UN CORPS DE LAMINAGE ET PROCÉDÉ DE FABRICATION D'UN LAMINÉ

(30) Priorität: 16.11.2009 DE 102009053498
(43) Veröffentlichungstag der Anmeldung: 26.09.2012
(73) Patentinhaber: Giesecke & Devrient GmbH, 81677 München (DE)
(72) Erfinder: HUBER, Peter, 82256 Fürstenfeldbruck (DE); MINKS, Andreas, 83629 Weyarn (DE); KOHL, Klaus, 83714 Miesbach (DE)
(86) Internationale Anmeldenummer: PCT/EP2010/006973
(87) Internationale Veröffentlichungsnummer: WO 2011/057824

(56) Entgegenhaltungen:
- US-A- 3 859 110
- US-A- 4 396 448
- US-A1- 2008 011 167
- "Varnish", Wikipedia , 22 March 2009 (2009-03-22), Retrieved from the Internet: URL:http://web.archive.org/web/20090326161 515/http://en.wikipedia.org/wiki/Varnish#P olyurethane [retrieved on 2014-07-10]

## Beschreibung

Die Erfindung betrifft einen Laminierkörper zum Herstellen von Laminatprodukten durch Laminieren einer Folie auf ein Substrat sowie ein Verfahren zur Herstellung eines solchen Laminierkörpers und ein Verfahren zum Herstellen eines Laminatprodukts mittels des Laminierkörpers.

Die vorliegend angesprochenen Laminatprodukte sind kartenförmige Datenträger.

Hierbei kann das Substrat aus einem nahezu beliebigen geeigneten Material bestehen, z.B. aus Papier, Kunststoff oder dergleichen.

Es ist bekannt, eine Andruckfläche von beim Laminieren verwendeten Laminierkörpern durch Fräsen, Ätzen oder Gravieren mit einer Struktur in Form von Vertiefungen zu versehen, die sich beim Laminieren in die auflaminierte Folie einprägt und in dem entstehenden Laminatprodukt wahrnehmbar ist. Derartige Prägungen können z.B. als Sicherheitsmerkmale der betreffenden Wertdokumente oder des Datenträgers dienen und als solche identifizierende Informationen, schwer zu fälschende Prägemuster oder dergleichen wiedergeben.

Das Herstellen von strukturierten Laminierkörpern nach Vorgaben eines Laminatproduktherstellers durch Fräsen, Ätzen oder Gravieren erfordert aufwändige Produktionsanlagen und -schritte, die in der Regel von einem Hersteller des Laminierkörpers im Rahmen des Produktionsprozesses durchzuführen sind. Dies verursacht nicht nur hohe Kosten, sondern hat auch relativ lange Produktions- und Lieferzeiten zur Folge, was für den Laminatprodukthersteller insbesondere bei eilig herzustellenden Laminatprodukten zu mangelnder Flexibilität und geringen Reaktionszeiten führt. Ebenso von Nachteil ist dieses Verfahren bei der Herstellung von nur kleinen Chargen von Laminatprodukten, da hierbei ein häufiger Wechsel des Laminierkörpers allein aufgrund geänderter Prägestrukturen notwendig ist.

Laminerkörper gemäß dem Stand der Technik sind aus den Patenten US 4,396,448 und US 3,859,110 bekannt.

Demzufolge ist es die Aufgabe der vorliegenden Erfindung, die Strukturierung eines Laminierkörpers derart zu optimieren, dass die Nachteile des Standes der Technik vermieden werden.

Diese Aufgabe wird durch einen Laminierkörper sowie durch Verfahren gemäß den Merkmalen der unabhängigen Ansprüche gelöst. In den davon abhängigen Ansprüchen sind vorteilhafte Ausgestaltungen und Weiterbildungen der Erfindung angegeben.

Erfindungsgemäß weißt eine Andruckfläche des Laminierkörpers eine aufgedruckte Struktur auf, die derart ausgestaltet ist, dass die Struktur beim Laminieren eine der Struktur spiegelbildlich entsprechende Prägung in die Folie einbringt. Entsprechend wird diese Struktur bei der Herstellung des Laminierkörpers auf dessen Andruckfläche derart aufgedruckt, dass sich die Struktur beim Laminieren einer Folie auf ein Substrat spiegelbildlich in die Folie einprägt.

Die aufgedruckte Struktur ist hierbei ausreichend erhaben bzw. dick aufgetragen, dass sie sich beim Laminieren in die Folie einprägt. Außerdem ist die Struktur hinreichend hart und mechanisch widerstandsfähig. Auch wird die Struktur derart auf die Andruckfläche aufgedruckt, dass die Struktur beim Laminieren nicht an der aufzulaminierenden Folie haften bleibt, sondern sich ohne Beschädigung und rückstandsfrei von dieser ablösen lässt. Ferner ist die Struktur ausreichend hitzebeständig, um von einer etwaigen zum Laminieren erforderlichen Erhitzung der Andruckfläche nicht beschädigt zu werden.

Das erfindungsgemäße Aufdrucken der Struktur auf die Andruckfläche des Laminierkörpers erfordert einen wesentlich geringeren technischen Aufwand als beispielsweise ein Einfräsen oder Ätzen. Entsprechend ist das Aufdrucken wesentlich einfacher und schneller zu realisieren, flexibler und kostengünstiger. Der erfindungsgemäße Laminierkörper kann auch außerhalb aufwändiger Produktionseinrichtungen und ohne hohen technischen Aufwand mit der Struktur bedruckt werden, z.B. von einem Hersteller von kartenförmigen Datenträgern.

Dies führt einerseits zu einer erheblichen Zeit- und Kostenersparnis und damit zu einer erhöhten Flexibilität, die bei individuellen Anforderungen an die zu erzeugenden kartenförmigen Datenträgern von hoher Bedeutung ist. Schließlich kann durch das Aufdrucken der Strukturen vor Ort auch sichergestellt werden, dass ein Laminierkörperhersteller keine vertrauenswürdigen Informationen im Zusammenhang mit den Prägestrukturen und deren Inhalten erhält.

Bei dem Laminierkörper kann es sich insbesondere um ein Laminierblech handeln. Bevorzugt besteht der Laminierkörper aus Chromstahl, der bevorzugt ein- oder beidseitig hochglänzend ist, oder aus Messing, das bevorzugt vernickelt oder verchromt ist und besonders bevorzugt ein- oder beidseitig hochglänzend ist.

Die aufgedruckte Struktur kann insbesondere Individualisierungsdaten oder Personalisierungsdaten von Benutzern der herzustellenden Laminatprodukte wiedergeben.

Als Höhenausgleichsfelder bezeichnet man hierbei solche Bereiche der aufgedruckten Struktur, die Dickeschwankungen des Laminatprodukts, z.B. aufgrund eines darin eingelegten Gegenstands, ausgleichen können, z.B. eines elektronischen Bauteils, insbesondere eines Display, eines Gewebebands oder dergleichen. Andererseits können durch Höhenausgleichsfelder auch Dickeschwankungen des Laminatprodukts erzeugt werden, die wiederum entsprechende Dickeschwankungen eines weiteren Produkts, in das das Laminatprodukt eingebracht wird (z.B. Reisepass, insbesondere Reisepass mit Gewebeband), ausgleichen.

Aufgedruckte Flächenstrukturen mit definierter Rauhigkeit können insbesondere vollflächig oder teilweise matte oder glatte Flächen sein. Vorzugsweise sind in der aufgedruckten Struktur matte Flächen mit "negativen" Abbildungen vorgesehen, bei denen die eigentliche Abbildung als glatte Flächen innerhalb der matten Fläche dargestellt ist.

Die Struktur wird bevorzugt mittels Siebdruck und/oder Offsetdruck und/oder UV-Offsetdruck auf die Andruckfläche aufgedruckt. Offsetdruck und UV-Offsetdruck sind besonders zur Erzeugung feinster Mikrostrukturen, wie z.B. Mikrozeichen, und von Höhenausgleichsfeldern geeignet. Besonders bevorzugt wird ein Standardsiebdruckverfahren verwendet. Zum Drucken der Struktur auf die Andruckfläche wird ein thermisch stabiler Ofenlack oder UV-Lack verwendet. Durch die Verwendung eines thermisch stabilen Lacks ist eine lange Lebensdauer der aufgedruckten Struktur gewährleistet, wenn die Folie zum Laminieren erhitzt wird.

Die Struktur wird mit einem entfernbaren Lack auf die Andruckfläche aufgedruckt. Insbesondere kann es sich bei dem entfernbaren Lack um einen Lack handeln, der sich mit einem speziellen Reiniger wieder entfernen lässt. Nach Entfernen der aufgedruckten Struktur kann eine andere Struktur auf die Andruckfläche aufgedruckt werden, d.h. der Laminierkörper kann wiederverwendet werden. Dies ist dann besonders sinnvoll, wenn eine Struktur mit individuellen Informationen aufgedruckt wird, die nur wenige Male beim Laminieren geprägt werden soll.

Zusätzlich zu den aufgedruckten Strukturen auf den Andruckflächen des Laminierkörpers können weitere Strukturen vorgesehen sein, die geätzt, gefräst oder graviert sind. Dies kann beispielsweise dann sinnvoll sein, wenn gefräste, geätzte oder gravierte Strukturen eine weitgehend standardisierte Grundprägung erzeugen und die gedruckten Strukturen individuelle Ergänzungen dieser Grundprägung vornehmen, z.B. in Form von benutzer- oder chargenspezifischen Angaben, wie z.B. Namen, Denominationen oder dergleichen.

Weitere Merkmale und Vorteile der Erfindung ergeben sich aus der folgenden Beschreibung erfindungsgemäßer Ausführungsbeispiele sowie weiteren Ausführungsalternativen im Zusammenhang mit den Zeichnungen, die zeigen:
- Fig. 1: schematisch die Schritte eines Verfahrens zum Aufdrucken einer Struktur auf einen Laminierkörper;
- Fig. 2: schematisch verschiedene Laminierkörper mit unterschiedlichen aufgedruckten Strukturen als Schnittbild;
- Fig. 3: schematisch die Andruckfläche eines Laminierkörpers mit unterschiedlichen aufgedruckten Strukturen in Draufsicht; und
- Fig. 4: schematisch zwei verschiedene Laminiervorrichtungen.

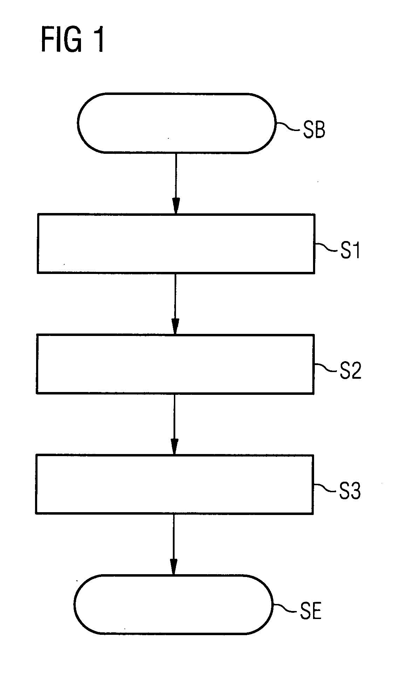

Fig. 1 zeigt schematisch die Schritte eines Verfahrens zum Aufdrucken einer Struktur auf einen Laminierkörper 1 und anschließende Verwendung des Laminierkörpers 1 zum Laminieren.

Nach dem Beginn SB des Verfahrens wird im Schritt S1 zunächst ein Laminierkörper 1 bereitgestellt und gegebenenfalls derart vorbereitet, dass er anschließend in dem Schritt S2 bedruckt werden kann. Der Laminierkörper 1 kann prinzipiell aus jedem ausreichend hitzefesten und stabilen Material bestehen. Vorliegend wird ein Laminierkörper 1 aus Metall verwendet, bevorzugt aus Chromstahl oder Messing oder vernickeltem Messing oder verchromtem Messing. Besonders bevorzugt ist der Laminierkörper aus Metall ein- oder beidseitig hochglänzend.

Zur Vorbereitung des Aufdruckens wird der Laminierkörper 1 gegebenenfalls gereinigt oder poliert. Auch kann ein Haftvermittler oder eine sonstige chemische Substanz auf die Andruckfläche 2 des Laminierkörpers 1 aufgebracht werden, die das Bedrucken des Laminierkörpers 1 in Schritt S2 erleichtert bzw. ermöglicht. Anschließend wird im Schritt S2 der Laminierkörper 1 derart mit einer geeigneten Drucksubstanz bedruckt, dass die Andruckfläche 2 des Laminierkörpers 1 eine aufgedruckte Struktur 3 aufweist, die so ausgestaltet ist, dass sie beim Laminieren (vgl. Schritt S3) eine Prägung in die Folie 51 einbringt.

Damit die aufgedruckte Struktur 3 beim Laminieren eine Prägung in der Folie 51 bewirkt, ist sie gegenüber der Andruckfläche 2 ausreichend erhaben. Zudem ist die aufgedruckte Struktur 3 hinreichend hart bzw. mechanisch widerstandsfähig und bleibt nach dem Laminieren nicht an der auflaminierten Folie 51 haften, d.h. eine adhäsive Verbindung, die die Struktur 3 beim Laminieren mit der Folie 51 gegebenenfalls eingeht, ist signifikant schwächer als die Verbindung der Struktur 3 zu der Andruckfläche 2. Falls die Folie 51 zum Laminieren durch den Laminierkörper 1 oder anderweitig erhitzt wird, ist die Struktur 3 zudem hinreichend hitzebeständig.

Die Struktur 3 kann auf jede beliebige geeignete Weise auf die Andruckfläche 2 aufgedruckt werden. Vorzugsweise wird hierfür ein Siebdruck-, Offsetdruck- oder UV-Offsetdruckverfahren eingesetzt, z.B. ein Standardsiebdruckverfahren. Zum Drucken der Struktur 3 wird ein thermisch stabiler Ofenlack oder UV-Lack verwendet, der sich z.B. nur mit einem speziellen Reiniger wieder entfernen lässt.

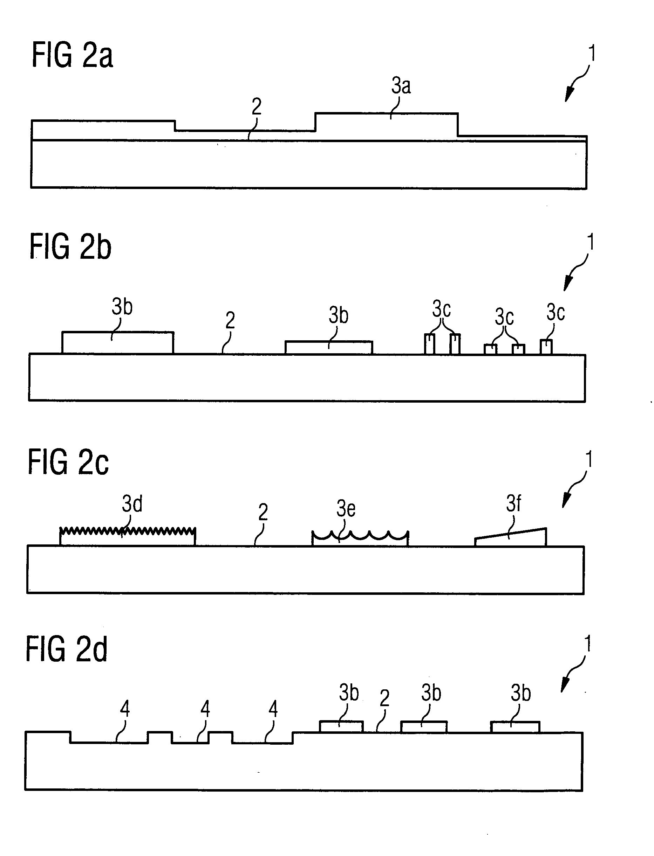

Beispiele für mögliche Formgebungen der aufgedruckten Struktur 3 sind in den Figuren 2a bis 2d im Querschnitt dargestellt. Die aufgedruckte Struktur 3a kann vollflächig auf die Andruckfläche 2 aufgedruckt werden und lediglich in ihrer Höhe variieren (Fig. 2a). Hierbei können nicht nur hervorstehende Strukturen 3a erzeugt werden, sondern auch Vertiefungen relativ zu weiteren aufgedruckten Strukturen 3a.

Die in Fig. 2b dargestellte Andruckfläche 2 ist nur teilweise mit breiten 3b und schmalen 3c hervorstehenden aufgedruckten Strukturen versehen, andere Bereiche der Andruckfläche 2 sind nicht mit aufgedruckten Strukturen 3b, 3c versehen. Die aufgedruckten Strukturen 3b, 3c haben hierbei unterschiedliche Höhen.

Die in Fig. 2c dargestellte Andruckfläche 2 ist mit einer aufgedruckten Struktur 3d mit definierter Rauhigkeit, einer aufgedruckten Struktur 3e, die beim Laminieren ein MLI ("Multiple Laser Image") als Prägung hinterlässt und einer weiteren in ihrer Höhe variierenden Struktur 3f versehen. Insbesondere zum Erzeugen eines MLI 3e aber auch zum Erzeugen beliebiger sonstiger in ihrer Höhe variierender Strukturen 3f kann ein spezieller Relieflack verwendet werden. Die Struktur 3d mit definierter Rauhigkeit hinterlässt beim Laminieren eine matt erscheinende Prägung. Diese Struktur 3d kann insbesondere einen Rz-Wert von 2-10 µm haben, wobei der Rz-Wert die Flächenrauhigkeit mittels des Abstands zwischen der tiefsten Senkung und der höchsten Erhebung der rauen Fläche angibt.

Die in Fig. 2d dargestellte Andruckfläche 2 ist wie in Fig. 2b mit breiten hervorstehenden aufgedruckten Strukturen 3b versehen. Im Gegensatz zu Fig. 2b ist die hier dargestellte Andruckfläche 2 jedoch zusätzlich mit Vertiefungen 4 versehen, die durch Ätzen, Fräsen oder Gravieren in den Laminerkörper 1 eingebracht wurden und insofern unterhalb es Niveaus der Andruckfläche 2 liegen.

Die aufgedruckten Strukturen, wie sie beispielhaft in Figuren 2a bis 2d dargestellt sind, haben typischerweise eine Höhe von 2 bis 10 µm, können aber auch jede andere technisch sinnvolle und von eine Hersteller von Laminatprodukten gewünschte Höhe aufweisen.

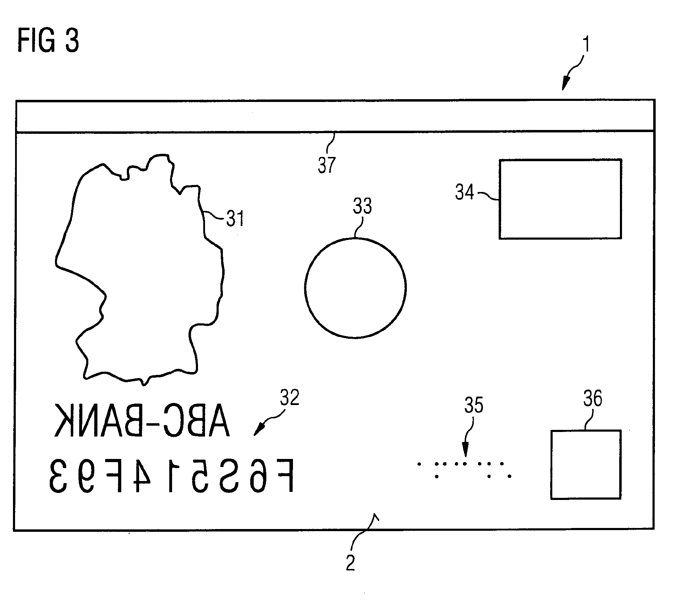

In Fig. 3 ist eine Andruckfläche 2 eines Laminierkörpers 1 dargestellt, die mit aufgedruckten Strukturen 3 versehen ist, welche beim Laminieren Prägungen in Form einer Abbildung der Kontur eines Landes 31, einer Abbildung eines Guillochemusters 36, alphanumerischer Zeichen 32, alphanumerischer Zeichen als Brailleschrift 35, eines Höhenausgleichsfelds 33, eines MLI 34 sowie einer Markierung 37 zur technischen Weiterverarbeitung des Laminatprodukts hinterlassen. Hierbei geben die alphanumerischen Zeichen 32, 35 Individualisierungs- und Personalisierungsdaten wieder.

Weiterhin können auch Abbildungen in Form von Logos, alphanumerische Zeichen in Form von Mikrozeichen, Hilfen zur technischen Weiterverarbeitung des Laminatprodukts in Form von Einlegefeldern und Streifenfeldern oder beliebige sonstige Strukturen vorgesehen sein, welche durch Prägung in einer Folie 51 erzeugt werden können.

Die Strukturen 3 können auch in Form von Flächen mit definierter Rauhigkeit vorgesehen sein, wie zuvor im Zusammenhang mit Fig. 2c beschrieben, insbesondere zur Darstellung der zuvor genannten Abbildungen 31, 36 und Markierungen 37. Die Flächen mit definierter Rauhigkeit können insbesondere vollflächig oder partiell matte oder glatte Flächen sein. Insbesondere können auch matte Flächen mit "negativen" Abbildungen, insbesondere Logos, vorgesehen sein, d.h. die Abbildungen werden durch glatte Flächen innerhalb der matten Fläche dargestellt.

Die aufgedruckten Strukturen 3 können teilweise oder generell derart ausgestaltet sein, dass sie beim Laminieren eine taktil wahrnehmbare Prägung erzeugen.

Im Verfahrensschritt S3 der Fig. 1 wird schließlich eine Folie 51 auf ein beliebiges Substrat 52 laminiert, um ein Laminatprodukt 50 zu erzeugen. Dabei werden die auf den Laminierkörper aufgedruckten Strukturen 3 in die Folie 51 eingeprägt, woraufhin der in Fig. 1 dargestellte Verfahrensablauf schließlich endet SE.

Bei dem Laminatprodukt 50 handelt es sich um einen kartenförmigen Datenträger.

Insbesondere kann es sich bei dem Laminatprodukt 50 auch um einen Personalausweis, eine laminierte Seite eines Reisepasses, einen Firmenausweis, eine Bankkarte, eine Kreditkarte, eine Bezahlkarte (Geldkarte), eine Versicherungskarte, einen Mitgliedsausweis oder dergleichen handeln.

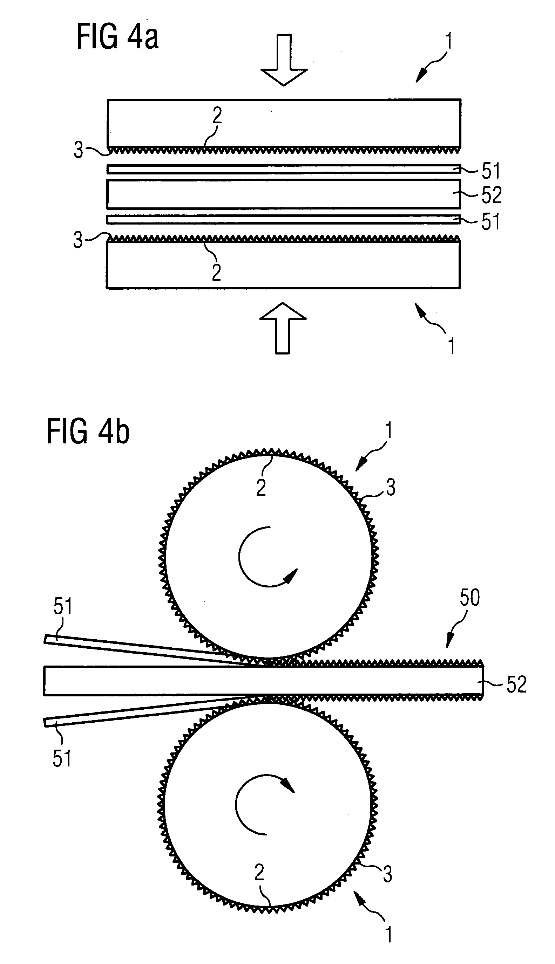

In den Figuren 4a und 4b sind mögliche Laminiervorrichtungen angedeutet. Bei der Laminiervorrichtung der Fig. 4a wird die Folie 51 mit den Andruckflächen 2 zweier als Blech ausgeführter Laminierkörper 1 auf das Substrat 52 aufgepresst. Die Laminierkörper 1 sind auf ihren Andruckflächen 2 mit aufgedruckten Strukturen 3 versehen, die sich bei diesem Vorgang in die Folie 51 prägen. Alternativ kann selbstverständlich auch nur einer der Laminierkörper 1 auf seiner Andruckfläche 2 mit einer aufgedruckten Struktur 3 versehen sein.

Damit die Folie 51 mit dem Substrat 52 eine Haftverbindung eingeht, wird sie während des Zusammenpressens erhitzt. Alternativ könnte auch selbstklebende Folien 51 verwendet werden oder ein Kleber bzw. Haftvermittler auf die Folien 51 oder das Substrat 52 aufgebracht werden. Das Substrat 52 kann insbesondere aus Papier oder Kunststoff und die Folie 51 insbesondere aus Kunststoff bestehen.

Bei der in Fig. 4b dargestellten Laminiervorrichtung sind die Laminierkörper 1 als Walzen mit umlaufender Andruckfläche 2 ausgebildet. Die Folien 51 werden somit auf das Substrat 52 gewalzt. Hierbei werden diese erhitzt, wodurch die Folien 51 mit dem Substrat 52 eine haftende Verbindung eingehen, und das Laminatprodukt 50 erzeugt wird. Gleichzeitig werden die auf den Andruckflächen 2 aufgedruckten Strukturen 3 in die Folie 51 geprägt. Alternativ kann auch eine selbstklebende Folie 51 oder ein Haftvermittler verwendet werden werden. Ebenso kann auch nur einer der Laminierkörper 1 auf seiner Andruckfläche 2 mit einer aufgedruckten Struktur 3 versehen sein. Das Substrat 52 kann insbesondere aus Papier oder Kunststoff und die Folie 51 insbesondere aus Kunststoff bestehen.

Die aufgedruckten Strukturen 3 sind in den Figuren 4a und 4b darstellungsbedingt als regelmäßige sich periodisch wiederholende Strukturen 3 gezeigt. Tatsächlich sind die aufgedruckten Strukturen 3 in der Regel wesentlich komplexer, wie beispielsweise an Hand der Figuren 2 und 3 geschildert wurde.

## Patentansprüche

1. Laminierkörper (1) zum Laminieren einer Folie (51) auf ein Substrat (52) zur Herstellung eines kartenförmigen Datenträgers,
wobei eine Andruckfläche (2) des Laminierkörpers (1) eine aufgedruckte Struktur (3) aufweist, die derart ausgestaltet ist, dass die Struktur (3) beim Laminieren eine Prägung in die Folie (51) einbringt,
wobei die Struktur (3) mit einem entfernbaren Lack auf die Andruckfläche (2) aufgedruckt ist,
wobei die Struktur (3) mit einem thermisch stabilen Ofenlack oder UV-Lack auf die Andruckfläche (2) aufgedruckt ist,
wobei die aufgedruckte Struktur (3) derart ausgestaltet ist, dass die Struktur (3) beim Laminieren zumindest eine Prägung in die Folie (51) einbringt, die taktil wahrnehmbar ist oder ein "Multiple Laser Image" (34), eine Abbildung, alphanumerische Zeichen (32, 35) oder eine Hilfe zur technischen Weiterverarbeitung eines beim Laminieren gebildeten Laminatprodukts repräsentiert.

2. Laminierkörper (1) nach Anspruch 1, **dadurch gekennzeichnet, dass** der Laminierkörper (1) ein Laminierblech ist, insbesondere ein Laminierblech aus Chromstahl oder Messing.

3. Laminierkörper (1) nach Anspruch 1 oder 2, **dadurch gekennzeichnet, dass** die aufgedruckte Struktur (3) Individualisierungsdaten oder Personalisierungsdaten wiedergibt.

4. Laminierkörper (1) nach einem der vorherigen Ansprüche, **dadurch gekennzeichnet, dass** die Struktur (3) mittels Siebdruck oder Offsetdruck, insbesondere mittels UV-Offsetdruck, auf die Andruckfläche (2) aufgedruckt ist.

5. Laminierkörper (1) nach einem der vorherigen Ansprüche, **dadurch gekennzeichnet, dass** die Andruckfläche (2) eine geätzte und/ oder gefräste und/ oder gravierte zusätzliche Struktur (3) aufweist.

6. Verfahren zur Herstellung eines Laminierkörpers (1) zur Herstellung eines kartenförmigen Datenträgers,
wobei auf eine Andruckfläche (2) des Laminierkörpers (1) eine Struktur (3) derart aufgedruckt wird, dass sich die Struktur (3) beim Laminieren einer Folie (51) auf ein Substrat (52) in die Folie (51) einprägt,
wobei die Struktur (3) mit einem entfernbaren Lack auf die Andruckfläche (2) aufgedruckt wird,
wobei die Struktur (3) mit einem thermisch stabilen Ofenlack oder UV-Lack auf die Andruckfläche (2) aufgedruckt wird,
wobei die Struktur (3) derart aufgedruckt wird, dass die Struktur (3) beim Laminieren zumindest eine Prägung in die Folie (51) einbringt, die taktil wahrnehmbar ist oder ein "Multiple Laser Image" (34), eine Abbildung, alphanumerische Zeichen (32, 35) oder eine Hilfe zur technischen Weiterverarbeitung eines beim Laminieren gebildeten Laminatprodukts repräsentiert.

7. Verfahren nach Anspruch 6, **dadurch gekennzeichnet, dass** Individualisierungsdaten oder Personalisierungsdaten aufgedruckt werden.

8. Verfahren nach einem der Ansprüche 6 bis 7, **dadurch gekennzeichnet, dass** die Struktur (3) mittels Siebdruck oder Offsetdruck, insbesondere mittels UV-Offsetdruck, auf die Andruckfläche (2) aufgedruckt wird.

9. Verfahren zum Herstellen eines Laminatprodukts (50), **dadurch gekennzeichnet, dass** eine Folie (51) mit einem Laminierkörper (1) nach einem der Ansprüche 1 bis 5 derart auf ein Substrat (52) laminiert wird, dass die auf der Andruckfläche (2) des Laminierkörpers (1) aufgedruckte Struktur (3) in die Folie (51) eingeprägt wird.

## Claims

1. A laminating body (1) for laminating a foil (51) onto a substrate (52) for manufacturing a card-shaped data carrier,
wherein a pressure area (2) of the laminating body (1) has an imprinted structure (3) which is configured such that the structure (3) incorporates an embossing in the foil (51) upon lamination,
wherein the structure (3) is imprinted on the pressure area (2) with a removable lacquer, wherein the structure (3) is imprinted on the pressure area (2) with a thermally stable stoving lacquer or UV lacquer,
wherein the imprinted structure (3) is configured such that the structure (3) incorporates in the foil (51) upon lamination at least one embossing which is tactilely perceptible or represents a "multiple laser image" (34), an image, alphanumeric characters (32, 35) or an aid for the technical further processing of a laminate product formed upon lamination.

2. The laminating body (1) according to claim 1, **characterized in that** the laminating body (1) is a laminating plate, in particular a laminating plate of chromium steel or brass.

3. The laminating body (1) according to claim 1 or 2, **characterized in that** the imprinted structure (3) reproduces individualization data or personalization data.

4. The laminating body (1) according to any of the preceding claims, **characterized in that** the structure (3) is imprinted on the pressure area (2) by means of screen printing or offset printing, in particular by means of UV offset printing.

5. The laminating body (1) according to any of the preceding claims, **characterized in that** the pressure area (2) has an etched and/or milled and/or engraved additional structure (3).

6. A method for manufacturing a laminating body (1) for manufacturing a card-shaped data carrier,
wherein a structure (3) is imprinted on a pressure area (2) of the laminating body (1) such that the structure (3) is embossed into the foil (51) upon lamination of a foil (51) onto a substrate (52),
wherein the structure (3) is imprinted on the pressure area (2) with a removable lacquer, wherein the structure (3) is imprinted on the pressure area (2) with a thermally stable stoving lacquer or UV lacquer,
wherein the structure (3) is imprinted such that the structure (3) incorporates in the foil (51) upon lamination at least one embossing which is tactilely perceptible or represents a "multiple laser image" (34), an image, alphanumeric characters (32, 35) or an aid for the technical further processing of a laminate product formed upon lamination.

7. The method according to claim 6, **characterized in that** individualization data or personalization data are imprinted.

8. The method according to any of the claims 6 to 7, **characterized in that** the structure (3) is imprinted on the pressure area (2) by means of screen printing or offset printing, in particular by means of UV offset printing.

9. A method for manufacturing a laminate product (50), **characterized in that** a foil (51) with a laminating body (1) according to any of the claims 1 to 5 is laminated onto a substrate (52) such that the structure (3) imprinted on the pressure area (2) of the laminating body (1) is embossed into the foil (51).

## Revendications

1. Corps de laminage (1) destiné au laminage d'une feuille (51) sur un substrat (52) pour la fabrication d'un support de données en forme de carte,
une surface de pressage (2) du corps de laminage (1) comportant une structure imprimée (3) réalisée de telle façon que la structure (3) pratique lors du laminage un gaufrage dans la feuille (51),
la structure (3) étant imprimée avec un vernis éliminable sur la surface de pressage (2),
la structure (3) étant imprimée avec un vernis à four thermiquement stable ou vernis UV sur la surface de pressage (2),
la structure imprimée (3) étant réalisée de telle façon que la structure (3), lors du laminage, pratique dans la feuille (51) au moins un gaufrage tactilement perceptible ou représente une «image laser multiple» (34), une illustration, des caractères alphanumériques (32, 35) ou une aide pour le traitement technique subséquent d'un produit stratifié formé lors du laminage.

2. Corps de laminage (1) selon la revendication 1, **caractérisé en ce que** le corps de laminage (1) est une tôle de laminage , en particulier une tôle de laminage en acier chromé ou laiton.

3. Corps de laminage (1) selon la revendication 1 ou 2, **caractérisé en ce que** la structure imprimée (3) reproduit des données d'individualisation ou des données de personnalisation.

4. Corps de laminage (1) selon une des revendications précédentes, **caractérisé en ce que** la structure (3) est imprimée par sérigraphie ou impression offset, en particulier par impression offset UV, sur la surface de pressage (2).

5. Corps de laminage (1) selon une des revendications précédentes, **caractérisé en ce que** la surface de pressage (2) présente une structure (3) supplémentaire décapée et/ou fraisée et/ou gravée.

6. Procédé de fabrication d'un corps de laminage (1) pour la fabrication d'un support de données en forme de carte,
cependant que, sur une surface de pressage (2) du corps de laminage (1), une structure (3) est imprimée de telle façon que la structure (3), lors du laminage d'une feuille (51) sur un substrat (52), se gaufre dans la feuille (51),
la structure (3) étant imprimée avec un vernis éliminable sur la surface de pressage (2),
la structure (3) étant imprimée avec un vernis à four thermiquement stable ou vernis UV sur la surface de pressage (2),
la structure (3) étant imprimée de telle façon que la structure (3), lors du laminage, pratique dans la feuille (51) au moins un gaufrage tactilement perceptible ou représente une «image laser multiple» (34), une illustration, des caractères alphanumériques (32, 35) ou une aide pour le traitement technique subséquent d'un produit stratifié formé lors du laminage.

7. Procédé selon la revendication 6, selon la revendication 1, **caractérisé en ce que** des données d'individualisation ou des données de personnalisation sont imprimées.

8. Procédé selon une des revendications de 6 à 7, **caractérisé en ce que** la structure (3) est imprimée par sérigraphie ou impression offset, en particulier par impression offset UV, sur la surface de pressage (2).

9. Procédé de fabrication d'un produit stratifié (50), **caractérisé en ce qu'**une feuille (51) avec un corps de laminage (1) selon une des revendications de 1 à 5 est stratifiée de telle façon sur un substrat (52) que la structure (3) imprimée sur la surface de pressage (2) du corps de laminage (1) est gaufrée dans la feuille (51).
